# EUROPÄISCHE PATENTSCHRIFT

(11) **EP 4 294 851 B1**
(45) Veröffentlichungstag und Bekanntmachung des Hinweises auf die Patenterteilung: **16.10.2024**
(21) Anmeldenummer: 21706555.6
(22) Anmeldetag: 17.02.2021
(51) Int. Cl.: C08G 4/00, C08G 2/10, C08G 2/24

(54) **FLÜSSIGE 1,3-DIOXOLAN COPOLYMERE**
LIQUID 1,3-DIOXOLANE COPOLYMERS
COPOLYMÈRES LIQUIDES DE 1,3-DIOXOLANE

(43) Veröffentlichungstag der Anmeldung: 27.12.2023
(73) Patentinhaber: Wacker Chemie AG, 81671 München (DE)
(72) Erfinder: ASCHERL, Laura, 82140 Olching (DE); BAUMANN, Martina, 82054 Sauerlach (DE); DELLERMANN, Theresa, 81371 München (DE)
(86) Internationale Anmeldenummer: PCT/EP2021/053905
(87) Internationale Veröffentlichungsnummer: WO 2022/174895

(56) Entgegenhaltungen:
- JP-A- H0 859 817
- GOULART G ET AL: "Synthesis and electrochemical characterization of new polymer electrolytes based on dioxolane homo and co-polymers", ELECTROCHIMICA ACTA, ELSEVIER, AMSTERDAM, NL, vol. 37, no. 9, 1 January 1992 (1992-01-01), pages 1589 - 1592, XP026516888, ISSN: 0013-4686, [retrieved on 19920101], DOI: 10.1016/0013-4686(92)80117-5

## Beschreibung

Die Erfindung betrifft 1,3-Dioxolan Copolymere aus 1,3-Dioxolan und alkylsubstituiertem 1,3-Dioxolan sowie ein Verfahren zu deren Herstellung.

Der gravierende Beitrag von vermehrtem CO₂-Ausstoß zum Klimawandel ist unumstritten, und nicht erst seit der Unterzeichnung des Pariser Klimaabkommens ist die Reduktion von CO₂-Emissionen eine wichtige Stellschraube, um den Anstieg der globalen Durchschnittstemperatur zu stoppen.

Auch in der Produktion von Kunststoffen werden nicht unwesentliche Mengen an CO₂ in die Atmosphäre emittiert, laut Hochrechnungen des EIT Climate KIC sollen 2050 alleine 15 - 20 % des weltweiten CO₂-Ausstoßes auf die Produktion von Kunststoffen zurückzuführen sein. Eine Möglichkeit, um diesem Trend entgegenzuwirken, ist die Nutzbarmachung von CO₂ in der Kunststoffproduktion, und CO₂ nicht als Abfall, sondern als Ausgangsmaterial in die Wertschöpfungskette zu integrieren. Polyacetale stellen in diesem Kontext eine attraktive Kunststoffklasse dar, die über die Zwischenstufe zyklischer Acetale unter anderem durch katalytische Fixierung von CO₂ mit grünem Wasserstoff erzeugt werden können.

Klassische Polyacetale, auch genannt Polyoxymethylene (POM), wie sie beispielsweise durch Polymerisation von Formaldehyd oder Trioxan (POM-H) oder durch Ringöffnungspolymerisation von 1,3-Dioxolan (POM-C) erhalten werden können, sind jedoch bei Raumtemperatur fest, da die Polymere kristalline Teilbereiche und einen damit verbundenen Schmelzpunkt aufweisen, was je nach Anwendung eine Weiterverarbeitung bzw. Funktionalisierung erschwert.

Ziel der vorliegenden Erfindung war es daher, über einen weiten Temperaturbereich flüssige Polyacetale zu erhalten, welche aus zyklischen Acetalen realisierbar sind.

Durch den gezielten Einbau von Störstellen in Form von Alkylgruppen, welche aus dem Polymerrückgrat ragen, soll die Kristallinität des Polyacetals aufgehoben, nicht nur heruntergesetzt werden. Ein solches amorphes Verhalten lässt sich über dynamische Differenzkaloriemetriemessungen nachweisen, wenn nur ein Glasübergangspunkt, aber kein Schmelzpunkt vorliegen.

US7030207 BB beschreibt Polyacetale aus Trioxan und 1,3-Dioxolan, deren Kristallisationstemperatur herabgesetzt werden kann, jedoch kristallisieren die Polymere unterhalb einer bestimmten Temperatur.

Die Publikation "Thermal stability and dynamic mechanical properties of acetal copolymers" Angew. Makromol. Chem. 1999, 265, 55-61 beschreibt die Copolymerisation von Trioxan mit alkylierten 1,3-Dioxolanen, jedoch werden keine flüssigen Produkte erhalten.

Masahiko Okada et al., "Polymerizability of Methyl Substituted 1,3-Dioxolanes" Makromolekulare Chemie 176, 859-872 (1975) beschreibt die Homopolymerisation von 4-Methyl-1,3-Dioxolan zu einem viskosen Polymer, wobei Monomer und Polymer im Gleichgewicht vorliegen. Tiefe Temperaturen sind zur Polymerisation nötig sowie sehr lange Reaktionszeiten von mehreren Tagen.

EP3020741A beschreibt die Möglichkeit, Copolymere aus 1,3-Dioxolan und anderen Monomeren herzustellen. Eigenschaften der Copolymere sind nicht beschrieben.

Gegenstand der Erfindung sind 1,3-Dioxolan Copolymere der allgemeinen Formel I

H- [O-CH₂-O-CH₂-CH₂-]ₓ₁ [O-CH₂-CH₂O-CH₂-]ₓ₂

[O-CH₂-O-CHR¹-CHR²-]_{y1} [O-CHR¹-CHR²O-CH₂-]_{y2} OH (I),

in der
**x1+x2** Werte von 10 bis 2000 bedeuten,
**R¹** und **R²** Wasserstoffreste oder C₁- bis C₁₈-Alkylrest bedeuten, wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3_{*}(x1+x2+y1+y2)/100 bis 50_{*}(x1+x2+y1+y2)/100 bedeutet.

Die Copolymere sind aus 1,3-Dioxolan und an der 4-Position und /oder 5-Position substituiertem 1,3-Dioxolan aufgebaut. Sie sind über einen weiten Temperaturbereich flüssig und deshalb sehr gut geeignet, um weiter verarbeitet zu werden.

Sie weisen bevorzugt einen Glasübergang zwischen -50°C und - 70°C auf und haben insbesondere bevorzugt keinen Schmelzpunkt. Die Copolymere weisen einen Zersetzungsbeginn >110°C, insbesondere >100°C auf.

Die 1,3-Dioxolan Copolymere weisen die Einheiten [O-CH₂-O-CH₂-CH₂-]ₓ₁, [O-CH₂-CH₂O-CH₂-]ₓ₂, [O-CH₂-O-CHR¹-CHR²-]_{y1}, [O-CHR¹-CHR²O-CH₂-]_{y2}, statistisch oder in Blöcken auf.

Vorzugsweise bedeuten **x1+x2** Werte von 20 bis 1000, besonders bevorzugt von 30 bis 500, insbesondere von 50 bis 300.

Beispiele für Alkylreste **R¹** und **R²** sind lineare und verzweigte Alkylreste, wie der Methyl-, Ethyl-, i-Octyl, n-Octylrest und Cycloalkylreste, wie der Cyclohexylrest. Vorzugsweise bedeuten **R¹** und **R²** Wasserstoffreste oder C₁- bis C₆-Alkylreste, besonders bevorzugt Wasserstoffreste, Methyl- Ethyl-, n-Propyl- oder i-Propylreste.

Vorzugsweise bedeutet jeweils nur ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest.

Vorzugsweise bedeutet **y1+y2** Werte von 5_{*}(x1+x2+y1+y2)/100 bis 40_{*}(x1+x2+y1+y2)/100, besonders bevorzugt Werte von 10_{*}(x1+x2+y1+y2)/100 bis 30_{*}(x1+x2+y1+y2)/100, insbesondere Werte von 14_{*}(x1+x2+y1+y2)/100 bis 25_{*}(x1+x2+y1+y2)/100.

Die 1,3-Dioxolan Copolymere weisen vorzugsweise ein Molekulargewicht Mw zwischen 750 - 300000, besonders bevorzugt zwischen 1500 - 125000, ganz besonders bevorzugt zwischen 2200 - 63000, insbesondere zwischen 4000 - 25000 auf.

Die 1,3-Dioxolan Copolymere weisen vorzugsweise eine dynamische Viskosität bei 25 °C zwischen 50 mPas - 500 Pas, besonders bevorzugt zwischen 500 mPas - 200 Pas, insbesondere zwischen 1 Pas - 100 Pas auf.

Die 1,3-Dioxolan Copolymere der vorstehenden allgemeinen Formel I sind auf einfache Weise und mit kurzen Reaktionszeiten herstellbar.

Gegenstand der Erfindung ist auch ein Verfahren zur Herstellung der 1,3-Dioxolan Copolymere der vorstehenden allgemeinen Formel I,

H- [O-CH₂-O-CH₂-CH₂-]ₓ₁ [O-CH₂-CH₂O-CH₂-]ₓ₂

[O-CH₂-O-CHR¹-CHR²-]_{y1} [O-CHR¹-CHR²O-CH₂-]_{y2} OH (I),

in der
**x1+x2** Werte von 10 bis 2000 bedeuten,
**R¹** und **R²** Wasserstoffreste oder C₁- bis C₁₈-Alkylrest bedeuten, wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3* (x1+x2+y1+y2)/100 bis 50* (x1+x2+y1+y2)/100 bedeutet,
bei dem 1,3-Dioxolan mit alkylsubstituiertem 1,3-Dioxolan der allgemeinen Formel II 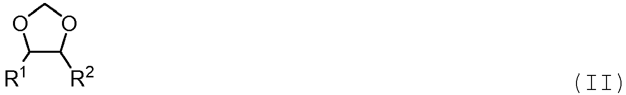
in Gegenwart einer Lewis- oder Bronstedt-Säure copolymerisiert wird.

In der allgemeinen Formel II befinden sich Alkylreste **R¹** und **R²** in 4 und 5 Stellung der 1,3-Dioxolane.

Das Verfahren ist eine ringöffnende Polymerisation der Dioxolan-Monomere durch kationisch induzierte Katalyse. Katalysator ist eine Lewis- oder Bronstedt-Säure.

Im Verfahren werden vorzugsweise mindestens 10 Mol-%, besonders bevorzugt mindestens 20 Mol-%, insbesondere mindestens 30 Mol-% an alkylsubstituiertem 1,3-Dioxolan der allgemeinen Formel II, bezogen auf die Gesamtmenge an 1,3-Dioxolan und alkylsubstituiertem 1,3-Dioxolan der allgemeinen Formel II eingesetzt.

Im Verfahren muss mehr an alkylsubstituiertem 1,3-Dioxolan der allgemeinen Formel II eingesetzt werden, da dieses reaktionsträger ist als 1,3-Dioxolan, als rechnerisch notwendig ist um einen bestimmten Anteil an Werten **y1+y2** zu erzielen.

Beispiele für Säuren sind Lewis-Säuren, wie BF₃, AlCl₃, TiCl₃, SnCl₄, SO₃ PCl₅, POCl₃, FeCl₃ und dessen Hydrate und ZnCl₂; Bronstedt-Säuren, wie Bor-, Tetrafluorobor-, Salpetersäure, salpetrige Säure, Phosphorsäure, phosphorige Säure, unterphosphorige Säure, Schwefelsäure, schwefelige Säure, Peroxoschwefel-, Salz-, Fluß-, Jodwasserstoff-, Bromwasserstoff-, Perchlor-, Hexafluorophosphorsäure, Aluminiumchlorid, Zinkchlorid, Benzolsulfon-, p-Toluolsulfon-, Methansulfon-, Trifluormethansulfon- und Carbonsäuren, wie Chloressig-, Trichloressig-, Essig-, Acryl-, Benzoe-, Trifluoressig-, Zitronen-, Croton-, Ameisen-, Fumar-, Malein-, Malon-, Gallus-, Itacon-, Milch-, Wein-, Oxal-, Phthal- und Bernsteinsäure, saure Ionenaustauscher, saure Zeolithe, säureaktivierte Bleicherde und säureaktivierter Ruß.

Besonders bevorzugt sind Bortrifluoridetherat und Trifluormethansulfonsäure.

Es können Initiatoren im Verfahren eingesetzt werden. Als Initiator ist bevorzugt ein mono- oder difunktioneller Alkohol, besonders bevorzugt Ethylenglykol eingesetzt.

Das Verfahren kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Methyl-tert-butylether, Diisopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan;

Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Die Bezeichnung Lösungsmittel bedeutet nicht, dass sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Besonders bevorzugt wird eine Lösung aus Trifluormethansulfonsäure und einem Initiator eingesetzt, wobei als bevorzugtes Lösungsmittel Methylenchlorid verwendet wird. Die eingesetzte Menge an Katalysator und Initiator bestimmt das erzielbare Molekulargewicht des 1,3-Dioxolan Copolymers der allgemeinen Formel I.

Das Verfahren wird vorzugsweise bei einer Temperatur zwischen 10 und 60 °C, besonders bevorzugt zwischen 15 und 40 °C, insbesondere zwischen 21 und 30 °C durchgeführt. Ganz besonders bevorzugt ist eine Reaktionstemperatur von 23 °C.

Die Aufarbeitung der Reaktion erfolgt bevorzugt durch Inaktivierung des Katalysators mittels einer geeigneten Base, Waschen mit einem Kohlenwasserstoff, wie Heptan und Trocknung bei vermindertem Druck.

Als Base eignet sich bevorzugt Pyridin, Triethylamin oder wässrige Natronlauge.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

### Analytik für die gesamte Erfindung:

### NMR-Spektroskopie für die Bestimmung des Anteils an Alkylethylenoxid-Brücken y1+y2:

Die Messung erfolgt in Lösung in CDCl₃ an einem Bruker Avance 500 oder Ascend 500 (500 MHz für ¹H-Spektrum). Alle Messungen sind gegen TMS als externen Standard referenziert. Die Bestimmung der relativen Verhältnisse der Monomereinheiten im Polymer erfolgt durch Integration der jeweiligen Signalsätze.

### SEC (Size-Exclusion Chromatography) zur Bestimmung der zahlenmittleren und massenmittleren Molekulargewichte Mn, Mw und der Polydispersität:

Die Messung erfolgt gegen Polystyrol-Standard, in THF, bei 35°C, Flussrate 0,3 ml/min und Detektion mit RID (Brechungsindex-Detektor) auf einer PLgel MiniMIX-C Guard Säule von Agilent mit einem Injektionsvolumen von 20 µl.

### Rheometer zur Bestimmung der dynamischen Viskosität:

Die Messung erfolgt an einem Rotations-Viskosimeter MCR 320 der Firma Anton Paar bei 25 °C. Die graphische Auswertung erfolgt durch Auftragung der Viskosität gegen die Schubspannung.

### DSC (Differential Scanning Calorimetry/Dynamische Differenz Thermoanalyse) zur Bestimmung des Schmelzpunktes und der Glasübergangstemperatur:

Die Messung erfolgt an einem DSC-1 Gerät der Firma Mettler Toledo in einem Temperaturbereich von - 150 °C bis 150 °C in zwei Durchläufen mit einer Heiz- bzw. Kühlrate von 10 K/min, wobei der zweite Lauf zur Bestimmung des Schmelzpunktes und der Glasübergangstemperatur genutzt wird.

### TGA-Analyse zur Bestimmung des Zersetzungsbeginns:

Die Ermittlung des Zersetzungsbeginns (Onset) erfolgt an einem TGA-2 Gerät der Firma Mettler Toledo, wobei die Probe mit einer Heizrate von 10 K/min unter Sauerstoffatmosphäre erwärmt wird.

### Beispiel 1, nicht erfindungsgemäß:

8,0 ml (114 mmol) 1,3-Dioxolan (DXL) werden in einen Kolben gegeben und unter Rühren 14 µl Bortrifluorid-Etherat zugegeben. Es kann ein Viskositätsanstieg beobachtet werden, nach 10 Min ist die Reaktionslösung fest. Es werden 5 ml einer 5 Gew.-% Natriumcarbonatlösung zugegeben. Die Mischung wird in Dichlormethan gelöst und das Produkt in Heptan gefällt und filtriert. Der weiße Feststoff wird im Vakuum getrocknet.

### Beispiel 2:

3,6 ml (50 mmol) 1,3-Dioxolan (DXL) und 5,1 g (50 mmol) 4-Ethyl-1,3-dioxolan (EDX) werden in einen Kolben gegeben und unter Rühren 14 µl Bortrifluorid-Etherat zugegeben. Es kann ein Viskositätsanstieg beobachtet werden. Nach 4 h werden 5 ml einer 5 Gew.-% Natriumcarbonatlösung zugegeben und das Produkt mit Heptan gewaschen. Der viskose Rückstand wird im Vakuum getrocknet.

### Beispiel 3:

5,2 ml (75 mmol) 1,3-Dioxolan (DXL) und 2,55 g (25 mmol) 4-Ethyl-1,3-dioxolan (EDX) werden in einen Kolben gegeben und unter Rühren 14 µl Bortrifluorid-Etherat zugegeben. Es kann ein Viskositätsanstieg beobachtet werden. Nach 2 h ist der Reaktionsansatz nicht mehr rührbar. Es werden 5 ml einer 5 Gew.-% Natriumcarbonatlösung und Dichlormethan zugegeben und das Produkt in Heptan gefällt. Der hochviskose, weiße Rückstand wird im Vakuum getrocknet.

### Beispiel 4:

5,8 ml (83 mmol) 1,3-Dioxolan (DXL) und 1,74 g (17 mmol) 4-Ethyl-1,3-dioxolan (EDX) werden in einen Kolben gegeben und unter Rühren 14 µl Bortrifluorid-Etherat zugegeben. Die Reaktion ist stark exotherm und es kann ein Viskositätsanstieg beobachtet werden. Nach 5 min ist der Reaktionsansatz nicht mehr rührbar. Es werden 5 ml einer 5 Gew.-% Natriumcarbonatlösung und 5 ml Dichlormethan zugegeben und das Produkt in Heptan gefällt. Der weiße Feststoff wird im Vakuum getrocknet.

### Beispiel 5:

5,1 g (50 mmol) 4-Ethyl-1,3-dioxolan (EDX) und 14 µl Bortrifluorid-Etherat werden in einen Kolben gegeben. Innerhalb von 15 min werden 3,6 ml (50 mmol) 1,3-Dioxolan (DXL) unter Rühren zugetropft. Der Reaktionsansatz wird nach 2 h durch Zugabe von 5 ml einer 5 Gew.-% Natriumcarbonatlösung gestoppt. Nach Zugabe von Dichlormethan wird das Produkt mit Heptan gewaschen und im Vakuum getrocknet. Es entsteht ein viskoses Öl.

### Beispiel 6:

2,55 g (25 mmol) 4-Ethyl-1,3-dioxolan (EDX) und 14 µl Bortrifluorid-Etherat werden in einen Kolben gegeben. Innerhalb von 30 min wird unter Rühren 4,2 ml (60 mmol) 1,3-Dioxolan (DXL) zugetropft. Der Reaktionsansatz wird nach 2 h durch Zugabe von 5 ml einer 5 Gew.-% Natriumcarbonatlösung gestoppt. Nach Zugabe von Dichlormethan wird das Produkt in Heptan getropft, die Heptanphase entfernt und der Rückstand im Vakuum getrocknet. Es entsteht ein viskoses Öl.

### Für Beispiele 7 bis 10:

### Herstellung der Katalysatorlösung:

10 ml trockenes Dichlormethan, 1000 µl Ethylenglykol und 76 µl Trifluromethansulfonsäure werden zusammengegeben und für 1h bei Raumtemperatur gerührt.

### Beispiel 7:

4,5 ml Katalysatorlösung und 4,5 ml trockenes Dichlormethan werden in einen Kolben gegeben und auf 23 °C temperiert. Anschließend werden 67,5 g (640 mmol) 4-Ethyl-1,3-dioxolan (EDX) und 45 ml (640 mmol) 1,3-Dioxolan (DXL) zugegeben und gerührt. Der Reaktionansatz verfärbt sich rosa. Nach 4,5 h wird solange Pyridin zugegeben bis sich der Ansatz entfärbt. Das Produkt wird mit Heptan gewaschen und anschließend im Vakuum getrocknet.

### Beispiel 8:

9,0 ml Katalysatorlösung werden in einen Kolben gegeben und auf 23 °C temperiert. Anschließend werden 67,5 g (640 mmol) 4-Ethyl-1,3-dioxolan (EDX) und 45 ml (640 mmol) 1,3-Dioxolan (DXL) zugegeben und der Reaktionsansatz für 60 min bei 21 °C gerührt. Der Reaktionsansatz verfärbt sich rosa. Nach 5,5 h wird solange Pyridin zugegeben bis sich der Ansatz entfärbt. Das Produkt wird mit Heptan gewaschen und anschließend im Vakuum getrocknet.

### Beispiel 9:

0,25 ml Katalysatorlösung und 0,25 ml Dichlormethan werden in einen Kolben gegeben. Anschließend werden 3,75 g (35 mmol) 4-Ethyl-1,3-dioxolan (EDX) und 2,5 ml (35 mmol) 1,3-Dioxolan (DXL) zugegeben und die Mischung bei 23 °C für 3 h gerührt. Es werden 10 ml Dichlormethan zur Reaktion gegeben und anschließend bis pH 7 10%-ige Natronlauge zugetropft. Das Produkt wird zweimal mit 20 ml Wasser gewaschen und im Vakuum getrocknet.

### Beispiel 10:

0,25 ml Katalysatorlösung und 0,25 ml Dichlormethan werden in einen Kolben gegeben. Anschließend werden 800 mg (8 mmol) 4-Ethyl-1,3-dioxolan (EDX) und 4,7 ml (67 mmol) 1,3-Dioxolan (DXL) zugegeben und die Mischung bei 23 °C gerührt. Nach 4 h werden 1 ml Pyridin und 5 ml Dichlormethan zugegeben. Nach Zugabe von Heptan wird der Überstand abdekantiert und das Produkt im Vakuum getrocknet. Es entsteht ein weißer Feststoff.

**Tabelle:**

| Beispiel | n(DXL) in mmol | n(EDX) in mmol | Einbau EDX in % | Mn in g/mol | Mw in g/mol | PDI | Tm | Tg |
|---|---|---|---|---|---|---|---|---|
| Katalysator: BF₃-Et₂O | | | | | | | | |
| 1* | 114 | 0 | 0 | 4500 | 11300 | 2,54 | 55 °C | -60 °C |
| 2 | 50 | 50 | 19 | 7515 | 24458 | 3,25 | - | -62 °C |
| 3 | 75 | 25 | 9 | 5770 | 19729 | 3,42 | 21 °C | -62 °C |
| 4 | 83 | 17 | 7 | 12910 | 54341 | 4,21 | 26 °C | -61 °C |
| 5 | 50 | 50 | 16 | 2040 | 4980 | 2,4 | - | -62 °C |
| 6 | 60 | 25 | 14 | 4100 | 12100 | 3,0 | - | -62 °C |

| Katalysatorlösung: Trifluormethansulfonsäure/Ethylenglykol in Methylenchlorid | | | | | | | | |
|---|---|---|---|---|---|---|---|---|
| 7 | 640 | 640 | 19 | 7960 | 22080 | 2,7 | - | -62 °C |
| 8 | 640 | 640 | 17 | 3740 | 8720 | 2,3 | - | -62 °C |
| 9 | 35 | 35 | 10 | 4200 | 12695 | 3,0 | 14 °C | -62 °C |
| 10 | 67 | 8 | 4 | 7070 | 31400 | 4,4 | 33 °C | -62 °C |

| | | | | | | | | |
|---|---|---|---|---|---|---|---|---|
| * nicht erfindungsgemäß | | | | | | | | |

## Patentansprüche

1. 1,3-Dioxolan Copolymere der allgemeinen Formel I
H- [O-CH₂-O-CH₂-CH₂-]ₓ₁ [O-CH₂-CH₂O-CH₂-]ₓ₂
[O-CH₂-O-CHR¹-CHR²-]_{y1} [O-CHR¹-CHR²O-CH₂-]_{y2} OH (I),
in der
**x1+x2** Werte von 10 bis 2000 bedeuten,
**R¹** und **R²** Wasserstoffreste oder C₁- bis C₁₈-Alkylrest bedeuten, wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3_{*}(x1+x2+y1+y2)/100 bis 50_{*}(x1+x2+y1+y2)/100 bedeutet.

2. 1,3-Dioxolan Copolymere nach Anspruch 1, bei denen die Reste **R¹** und **R²** ausgewählt werden aus Wasserstoffresten, Methyl-, Ethyl-, n-Propyl- oder i-Propylresten.

3. 1,3-Dioxolan Copolymere nach einem der vorstehenden Ansprüche, bei denen jeweils nur ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet.

4. 1,3-Dioxolan Copolymere nach einem der vorstehenden Ansprüche, welche ein Molekulargewicht Mw zwischen 750 - 300000 aufweisen, gemessen gegen Polystyrol-Standard, in THF, bei 35°C, Flussrate 0,3 ml/min und Detektion mit RID (Brechungsindex-Detektor) auf einer PLgel MiniMIX-C Guard Säule von Agilent mit einem Injektionsvolumen von 20 µl.

5. 1,3-Dioxolan Copolymere nach einem der vorstehenden Ansprüche, welche eine dynamische Viskosität bei 25 °C zwischen 50 mPas - 500 Pas aufweisen, gemessen an einem Rotations-Viskosimeter MCR 320 der Firma Anton Paar bei 25 °C, wobei die graphische Auswertung durch Auftragung der Viskosität gegen die Schubspannung erfolgt.

6. Verfahren zur Herstellung der 1,3-Dioxolan Copolymere der allgemeinen Formel I,
H- [O-CH₂-O-CH₂-CH₂-]ₓ₁ [O-CH₂-CH₂O-CH₂-]ₓ₂
[O-CH₂-O-CHR¹-CHR²-]_{y1} [O-CHR¹-CHR²O-CH₂-]_{y2} OH (I),
in der
**x1+x2** Werte von 10 bis 2000 bedeuten,
**R¹** und **R²** Wasserstoffreste oder C₁- bis C₁₈-Alkylrest bedeuten, wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3*(x1+x2+y1+y2)/100 bis 50*(x1+x2+y1+y2)/100 bedeutet,
bei dem 1,3-Dioxolan mit alkylsubstituiertem 1,3-Dioxolan der allgemeinen Formel II 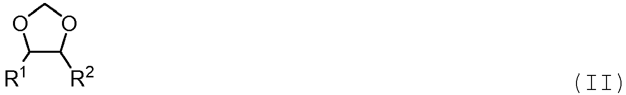
in Gegenwart einer Lewis- oder Bronstedt-Säure copolymerisiert wird.

7. Verfahren nach Anspruch 6, bei dem die Säure ausgewählt wird aus Bortrifluoridetherat und Trifluormethansulfonsäure.

8. Verfahren nach Anspruch 6 oder 7, bei dem die Temperatur zwischen 10 und 60 °C beträgt.

## Claims

1. 1,3-Dioxolane copolymers of the general formula I
H- [O-CH₂-O-CH₂-CH₂-]ₓ₁ [O-CH₂-CH₂O-CH₂-]ₓ₂
[O-CH₂-O-CHR1-CHR²-]_{y1} [O-CHR¹-CHR²O-CH₂-]_{y2} OH (I),
in which
**xl+x2** has values of 10 to 2000,
**R¹** and **R²** are hydrogen radicals or C₁ to C₁₈ alkyl radical, where in each case at least one radical **R¹** or **R²** in the units [O-CH₂-O-CHR²-CHR²-]_{y1} and [O-CHR²-CHR²O-CH₂-]_{y2} is a C₁ to C₁₈ alkyl radical,
with the proviso that **y1+y2** has values of 3_{*}(x1+x2+y1+y2)/100 to 50_{*}(x1+x2+y1+y2)/100.

2. 1,3-dioxolane copolymers according to Claim 1, in which the radicals **R¹** and **R²** are selected from hydrogen radicals or methyl, ethyl, n-propyl or i-propyl radicals.

3. 1,3-dioxolane copolymers according to either of the preceding claims, in which in each case only one radical **R¹** or **R²** in the units [O-CH₂-O-CHR²-CHR²-]_{y1} and [O-CHR¹-CHR²O-CH₂-]_{y2} is a C₁ to C₁₈ alkyl radical.

4. 1,3-dioxolane copolymers according to any of the preceding claims, which have a molecular weight Mw of between 750 - 300 000, measured against a polystyrene standard, in THF, at 35°C, flow rate 0.3 ml/min and detection with RID (refractive index detector) on an Agilent PLgel MiniMIX-C Guard column with an injection volume of 20 µl.

5. 1,3-dioxolane copolymers according to any of the preceding claims, which have a dynamic viscosity at 25°C of between 50 mPas - 500 Pas, measured on an Anton Paar MCR 320 rotational viscometer at 25°C, where the graphical evaluation is performed by plotting viscosity against shear stress.

6. Process for producing the 1,3-dioxolane copolymers of the general formula I,
H- [O-CH₂-O-CH₂-CH₂-]ₓ₁ [O-CH₂-CH₂O-CH₂-]ₓ₂
[O-CH₂-O-CHR¹-CHR²-]_{y1} [O-CHR¹-CHR²O-CH₂-]_{y2} OH (I),
in which
**xl+x2** has values of 10 to 2000,
**R¹** and **R²** are hydrogen radicals or C₁ to C₁₈ alkyl radical, where in each case at least one radical **R¹** or **R²** in the units [O-CH₂-O-CHR¹-CHR²-]_{y1} and [O-CHR¹-CHR²O-CH₂-]_{y2} is a C₁ to C₁₈ alkyl radical,
with the proviso that **y1+y2** has values of 3* (x1+x2+y1+y2)/100 to 50* (x1+x2+y1+y2)/100,
in which process 1,3-dioxolane is copolymerized with alkyl-substituted 1,3-dioxolane of the general formula II 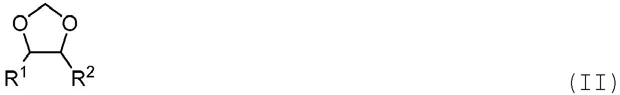
in the presence of a Lewis or Brønsted acid.

7. Process according to Claim 6, in which the acid is selected from boron trifluoride etherate and trifluoromethanesulfonic acid.

8. Process according to Claim 6 or 7, in which the temperature is between 10°C and 60°C.

## Revendications

1. Copolymères de 1,3-dioxolane de formule générale I
H- [O-CH₂-O-CH₂-CH₂-]ₓ₁ [O-CH₂-CH₂O-CH₂-]ₓ₂
[O-CH₂-O-CHR¹-CHR²-]_{y1} [O-CHR¹-CHR²O-CH₂-]_{y2} OH (I),
dans laquelle
x1 + x2 ont des valeurs de 10 à 2 000,
R¹ et R² représentent des radicaux hydrogène ou un radical alkyle en C₁ à C₁₈, au moins un radical R¹ ou R² représentant, dans les motifs [O-CH₂-O-CHR²-CHR²-]_{y1} et [O-CHR²-CHR²O-CH₂-]_{y2}, un radical alkyle en C₁ à C₁₈,
à la condition que y1 + y2 prennent des valeurs de 3_{*}(x1+x2+y1+y2)/100 à 50_{*}(x1+x2+y1+y2)/100.

2. Copolymères de 1,3-dioxolane selon la revendication 1, dans lesquels les radicaux R¹ et R² sont choisis parmi les radicaux hydrogène, les radicaux méthyle, éthyle, n-propyle ou isopropyle.

3. Copolymères de 1,3-dioxolane selon l'une des revendications précédentes, dans lesquels un seul radical R¹ ou R² représente, dans les motifs [O-CH₂-O-CHR²-CHR²-]_{y1} et [O-CHR²-CHR²O-CH₂-]_{y2}, un radical alkyle en C₁ à C₁₈.

4. Copolymères de 1,3-dioxolane selon l'une des revendications précédentes, qui ont une masse moléculaire Mw entre 750 et 300 000, mesurée contre un étalon polystyrène, dans du THF à 35 °C, débit 0,3 ml/min et détection par RID (détecteur d'indice de réfraction) sur une colonne PLgel MiniMIX-C Guard d'Agilent, pour un volume d'injection de 20 µl.

5. Copolymères de 1,3-dioxolane selon l'une des revendications précédentes, qui présentent une viscosité dynamique à 25 °C entre 50 mPa.s et 500 Pa.s, mesurée sur un viscosimètre rotatif MCR 320 de la société Anton Paar à 25 °C, l'évaluation graphique s'effectuant par tracé de la courbe de la viscosité en fonction de la contrainte de cisaillement.

6. Procédé de fabrication des copolymères de 1,3-dioxolane de formule générale I,
H- [O-CH₂-O-CH₂-CH₂-]ₓ₁ [O-CH₂-CH₂O-CH₂-]ₓ₂
[O-CH₂-O-CHR¹-CHR²-]_{y1} [O-CHR¹-CHR²O-CH₂-]_{y2} OH (I),
dans laquelle
x1 + x2 ont des valeurs de 10 à 2 000,
R¹ et R² représentent des radicaux hydrogène ou un radical alkyle en C₁ à C₁₈, au moins un radical R¹ ou R² représentant, dans les motifs [O-CH₂-O-CHR¹-CHR²-]_{y1} et [O-CHR¹-CHR²O-CH₂-]_{y2}, un radical alkyle en C₁ à C₁₈,
à la condition que y1 + y2 prennent des valeurs de 3* (x1+x2+y1+y2)/100 à 50* (x1+x2+y1+y2)/100,
dans lequel on copolymérise le 1,3-dioxolane avec un 1,3-dioxolane à substitution alkyle de formule générale II 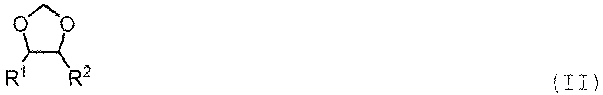
en présence d'un acide de Lewis ou de Brønstedt.

7. Procédé selon la revendication 6, dans lequel l'acide est choisi parmi l'éthérate de trifluorure de bore et l'acide trifluorométhane sulfonique.

8. Procédé selon la revendication 6 ou 7, dans lequel la température est comprise entre 10 et 60 °C.
